**Europäisches Patentamt**

**European Patent Office**

**Office européen des brevets**

(19)

(11) Veröffentlichungsnummer : **0 151 196**
**B1**

(12) **EUROPÄISCHE PATENTSCHRIFT**

(45) Veröffentlichungstag der Patentschrift :
**20.01.88**

(21) Anmeldenummer : **84101031.7**

(22) Anmeldetag : **02.02.84**

(51) Int. Cl.⁴ : **F 16 F 15/30**, F 03 G 3/08,
F 16 C 39/06, B 60 K 9/04

(54) **Schwungrad-Energiespeicher.**

(43) Veröffentlichungstag der Anmeldung :
**14.08.85 Patentblatt 85/33**

(45) Bekanntmachung des Hinweises auf die Patenterteilung : **20.01.88 Patentblatt 88/03**

(84) Benannte Vertragsstaaten :
**AT BE CH FR GB IT LI NL SE**

(56) Entgegenhaltungen :
**EP-A- 0 130 541**
**DE-A- 2 116 686**
**US-A- 4 223 240**
**RUSSIAN ENGINEERING JOURNAL, Band 46, Nr. 12,**
**1966, Seite 28; N.V. GULIA et al.: "Improving the**
**efficiency of inertia accumulators"**
**REVUE GENERALE DE L'ELECTRICITE, Nr. 12,**
**Dezember 1982, Seiten 846-854, Paris, FR; P.C. POU-**
**BEAU: "Les accumulateurs cinétiques d'énergie :**
**Applications au véhicule électrique"**
**PATENTS ABSTRACTS OF JAPAN, Band 7, Nr. 24 (M-**
**189)(1169), 29. Januar 1983**
**IEEE TRANSACTIONS ON MAGNETICS, Band MAG-**
**9, Nr. 3, September 1973, Seiten 210-214; K.J. KRO-**
**NENBERG: "Quantitative considerations to self-cen-**
**tering magnetic suspensions with permanent**
**magnets"**

(73) Patentinhaber : **Scheller, Wilhelm G.**
**Am Europakanal 7**
**D-8510 Fürth-Dambach (DE)**

(72) Erfinder : **Scheller, Wilhelm G.**
**Am Europakanal 7**
**D-8510 Fürth-Dambach (DE)**

(74) Vertreter : **Böhme, Volker, Dr. et al**
**Patentanwälte Dr. Böhme, Kessel, Böhme Karoli-**
**nenstrasse 27**
**D-8500 Nürnberg (DE)**

## Beschreibung

Die Erfindung betrifft einen Schwungrad-Energiespeicher, insbesondere für ein Kraftfahrzeug, bei dem ein auf einer vertikalen Welle sitzendes drehbares Schwungrad einerseits mit einer Antriebseinrichtung lösbar kuppelbar ist und andererseits mit einer Abtriebseinrichtung zusammenwirkt und eine Lagerung des Schwungrades vorgesehen ist, die zur radialen Lagerung Kugel- oder Rollenlager aufweist und bei der eine axiale magnetische Lagerung eines mit der Welle drehbaren Magnetringgebildes an einem dazu konzentrisch angeordneten weiteren liegenden Magnetringgebilde vorgesehen ist.

Bei einem bekannten (Zeitschrift « Russian Engineering Journal », Volume XLVVI no. 12, S. 28) Schwungrad-Energiespeicher dieser Art sitzen an der Welle sowohl das Schwungrad als auch zwei Paare von kleineren Magnetringgebilden. Die axiale magnetische Lagerung hat also nicht nur das Gewicht des Schwungrades, sondern auch das Gewicht der vier sich drehenden kleineren Magnetringgebilde zu tragen, das gerade im Hinblick auf diese mehrfache Belastung erheblich groß ist.

Es ist auch ein Magnet-Lager bekannt (DE-A-2 116 686), bei dem ein drehbares Magentringgebilde mit einem wesentlichen Anteil seiner Höhe oberhalb des liegenden Magnetringgebildes schwebend angeordnet ist, indem der Innendurchmesser des liegenden Magnetringgebildes deutlich größer als der Außendurchmesser des drehbaren Magnetringgebildes ist und beide Magnetringgebilde in entgegengesetzter radikaler Richtung magnetisiert sind. Allerdings handelt es sich hier um ein reines Magnet-Lager und nicht um einen Schwungrad-Energiespeicher.

Aufgabe der Erfindung ist es aber, einen Schwungrad-Energiespeicher der eingangs genannten Art zu schaffen, dessen Bauweise vereinfacht ist. Die Erfindung ist, diese Aufgabe lösend, dadurch gekennzeichnet, daß das Schwungrad von dem drehbaren Magnetringgebilde und einem zwischen diesem und der Welle befindlichen Distanzstück gebildet ist, daß der Innendurchmesser des liegenden Magnetringgebildes deutlich größer ist als der Außendurchmesser des drehbaren Magnetringgebildes und daß beide Magnetringgebilde in entgegengesetzter radialer Richtung magnetisiert sind, wobei das drehbare Magnetringgebilde mit einem wesentlichen Anteil seiner Höhe oberhalb des liegenden Magnetringgebildes schwebend angeordnet ist.

Die Magnetringgebilde kehren einander gleichnamige Pole zu und die Pole liegen an den Innen- und Außenflächen der Magnetringgebilde. Laufdauer und Tragkraft der magnetischen Lagerung sind verbessert. Je tiefer das drehbare Magnetringgebilde ist, desto tiefer taucht es in das liegende Magnetringgebilde ein. Das Schwungrad schwebt oberhalb der Höhlung des liegenden Magnetringgebildes und ist durch Abstoßung der beiden Magnetfelder getragen.

Das Schwungrad schwebt sozusagen gegenüber dem weiteren Magnetringgebilde und die mechanische Lagerung hat im wesentlichen nur noch radiale Kräfte aufzunehmen, da sie bezüglich nach unten gerichteter Kräfte entlastet ist. Durch die Anwendung der magnetischen Lagerung kann sich das Schwungrad, wenn es mit einer bestimmten zugeführten Energie in Rotation versetzt ist, viel länger drehen, als wenn es nur mechanisch gelagert ist. Die Bauweise ist einfach, weil das Schwungrad selbst Teil der magnetischen Lagerung bildet und das drehbare Magnetringgebilde der Lagerung darstellt.

Der erfindungsgemäße Schwungrad-Energiespeicher ist in der Regel bei einem Antrieb, insbesondere eines Kraftfahrzeuges, vorgesehen und weist ein schweres Schwungrad auf. Das Schwungrad ist z. B. auf der Welle drehbar, die unbeweglich angeordnet ist, oder es sitzt auf der Welle fest, die beiderends drehbar gelagert ist. Wesentlich für die Erfindung ist die magnetische Lagerung des Schwungrades und dessen Ausbildung als Magnetringgebilde. Die Magnetringgebilde können Elektromagente aufweisen, weisen aber der Einfachheit halber in der Regel Permanentmagnete auf. Das Distanzstück des Schwungrades ist in der Regel aus einem Werkstoff, der nicht magnetisch und nichtmagnestisierbar ist, z. B. Kunststoff oder wegen des Gewichtes Messing.

Besonders zweckmäßig und vorteilhaft ist es, wenn die radiale Abmessung des Distanzstückes gleich oder größer als die radiale Abmessung des drehbaren Magnetringgebildes ist. Das Distanzstück ist also nicht nur eine Art Nabe, mit der das Magnetringgebilde auf der Welle sitzt, sondern vom Radius des Schwungrades her gesehen ein erheblicher Teil des Schwungrades. Das Magnetringgebilde stellt den Kranz des Schwungrades dar.

Die Erfindung befaßt sich mit einer magnetischen Lagerung, die speziell für die Anwendung bei dem erfindungsgemäßen Schwungrad-Energiespeicher geeignet ist. Hierbei sind u. a. lange Laufdauer, große Tragfähigkeit des Magnetfeldes und geringer Platzbedarf erwünscht. Das Entstehen von Wirbelfeldern und Störströmen in dem Magnetringgebilde soll soweit als möglich vermieden sein.

Besonders zweckmäßig und vorteilhaft ist es sodann, wenn die Magnetringgebilde mit Weicheisenringen versehen sind, die als Ringreifen ausgebildet sind, von denen einer am Außenumfang des drehbaren und ein anderer am Innenumfang des liegenden Magnetringgebildes angeordnet sind. Die Weicheisenringe, die bei magnetischen Lagerungen die Magnetfelder im Hinblick auf größere Tragkraft günstig beeinflussen, sind in einer für den vorliegenden Anwendungsfall zweckmäßigen Weise angeordnet.

Besonders zweckmäßig und vorteilhaft ist es weiterhin, wenn jedes Magnetringgebilde von einer Ringkette von einzelnen blockartigen Magneten gebildet ist. Diese blockartigen Magnete sind in der Herstellung relativ einfach und preiswert und das Magnetisieren großer Magnetringe entfällt.

Besonders zweckmäßig und vorteilhaft ist es sodann, wenn die axiale und/oder radiale Abmessung des liegenden Permanentmagnetringgebildes größer ist als die des drehbaren Permanentmagnetringgebildes. Auch hierdurch sind die Tragkraft und die Laufdauer verbessert.

Besonders zweckmäßig und vorteilhaft ist es noch, wenn die Lagerung ein Kugel- oder Rollenlager aufweist, dessen Käfig von nichtmagnetischem Material gebildet ist. Diese Kugel- oder Rollenlager, deren Käfig z. B. aus Kunststoff besteht, werden von den Magnetfeldern der Magnetringgebilde nicht beeinflußt, was letztlich die Laufdauer erhöht.

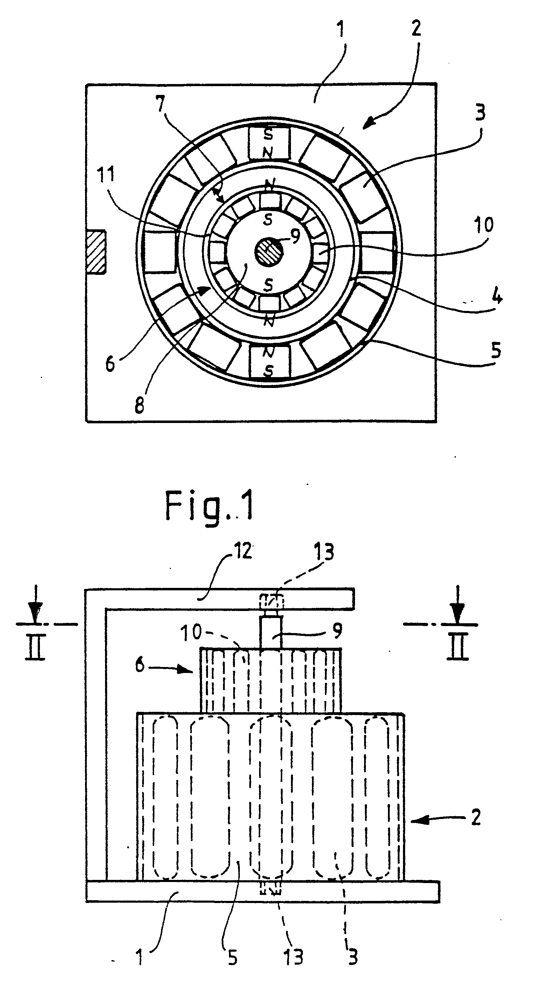

In der Zeichnung ist schematisch eine bevorzugte Ausführungsform der Erfindung dargestellt und zeigt Fig. 1 eine Seitenansicht eines Schwungrad-Energiespeichers und Fig. 2 einen Schnitt gemäß Linie II-II in Fig. 1.

Der Schwungrad-Energiespeicher gemäß Zeichnung gehört in nicht näher gezeigter Weise zu einem Kraftfahrzeug-Antrieb und ist mit einer Antriebseinrichtung, z. B. einem Motor kuppelbar, um das Schwungrad in hohe Drehzahl zu bringen und mit Rotationsenergie aufzuladen. Nach Beendigung des Aufladevorganges wird die Antriebseinrichtung abgekuppelt. Durch die Drehung des Schwungrades wird eine Abtriebseinrichtung in Gang gesetzt bzw. gehalten, die z. B. ein elektrischer Generator ist, der eine Batterie speist, die an einen Elektromotor angeschlossen ist. Bei dem Schwungrad-Energiespeicher liegt auf einer Bodenplatte 1 ein größeres Magnetringgebilde 2, das aus blockartigen, länglichen Permanentmagneten 3 zusammengesetzt ist, deren Längserstreckung vertikal verläuft. Die Permanentmagnete 3 sind z. B. dicht an dicht angeordnet, können aber zur Not auch auf Abstand voneinander angeordnet sein. Jeder Permanentmagnet 3 ist so magnetisiert, daß radial innen der Nordpol N und radial außen der Südpol S angeordnet ist. Die Permanentmagnete 3 liegen innen an einem rohrstückartigen Weicheisenring 4 an, dessen Höhe der vertikalen Länge der Permanentmagnete 3 entspricht. Außen sind die Magnete von einer Halterung 5 umfaßt.

Oberhalb der Höhlung des liegenden Magnetringgebildes 2 schwebt ein kleineres, drehbares Magnetringgebilde 6, das nicht oder nur geringfügig in die Höhlung eintaucht. Die radiale Abmessung des Spaltes bzw. Abstandes 7 zwischen den beiden Magnetringgebilden richtet sich nach den jeweiligen Gegebenheiten und ist hier so gewählt, daß sie kleiner ist als der Außenradius des drehbaren Magnetringgebildes 6. Das Magnetringgebilde 6 sitzt auf einem mittigen Distanzstück 8 und bildet zusammen mit diesem ein Schwungrad. Das Distanzstück 8 ist kreisrund, besteht aus einem nichtmagnetisierbaren Material, z. B. aus Kunststoff und stellt das Innenstück eines Rades dar. Das Schwungrad bzw. das Distanzstück 7 sitzt fest auf einer Welle 9 aus nichtmagnetisierbarem Material.

Das kleinere Magnetringgebilde 6 ist aus kleineren, blockartigen, länglichen Permanentmagneten 10 zusammengesetzt, deren Längserstreckung vertikal verläuft. Die Permanentmagnete 10 sind z. B. dicht an dicht angeordnet, können aber auch auf Abstand voneinander angeordnet sein. Jeder Permanentmagnet 10 ist so magnetisiert, daß radial außen der Nordpol N und radial innen der Südpol S angeordnet ist. Die Permanentmagnete 10 liegen außen an einem rohrstückartigen Weicheisenring 11 an, dessen Höhe der vertikalen Länge der Permanentmagnete 10 entspricht.

Oberhalb des drehbaren Magnetringgebildes 6 erstreckt sich ein Querbalken 12. Die Welle 9 ist in dem Querbalken und in der Bodenplatte 1 jeweils mittels eines Lagers 13 gelagert, das einen Kunststoffkäfig aufweist und primär radiale Kräfte aufzunehmen hat.

Zwischen jedem Permanentmagnet 10 und dem Distanzstück 8 ist ein Blechplättchen bzw. eine Platine vorgesehen, das bzw. die den Permanentmagnet abschirmt und die Bildung von Wirbelfeldern verhindert. Der Haltering 5 hat nur die Wirkung einer Halterung und kann auch durch eine Drahtwindung ersetzt sein. Der Zutritt von Magnetismus zu den Lagern der Welle 9 wird verhindert, indem die Welle und/oder das Distanzstück aus einem nichtmagnetisierbaren Material, z. B. Messing besteht.

**Patentansprüche**

1. Schwungrad-Energiespeicher, insbesondere für ein Kraftfahrzeug, bei dem ein auf einer vertikalen Welle (9) sitzendes drehbares Schwungrad, einerseits mit einer Antriebseinrichtung lösbar kuppelbar ist und andererseits mit einer Abtriebseinrichtung zusammenwirkt und eine Lagerung des Schwungrades vorgesehen ist, die zur radialen Lagerung Kugel- oder Rollenlager (13) aufweist und bei der eine axiale magnetische Lagerung eines mit der Welle (9) drehbaren Magnetringgebildes (6) an einem dazu konzentrisch angeordneten weiteren liegenden Magnetringgebilde (2) vorgesehen ist, dadurch gekennzeichnet, daß das Schwungrad von dem drehbaren Magnetringgebilde (6) und einem zwischen diesem und der Welle (9) befindlichen Distanzstück (8) gebildet ist, daß der Innendurchmesser des Magnetringgebildes (2) deutlich größer ist als der Außendurchmesser des drehbaren Magnetringgebildes (6) und daß beide Magnetringgebilde in entgegengesetzter Richtung magnetisiert sind, wobei das drehbare Magnetringgebilde (6) mit einem wesentlichen Anteil seiner Höhe oberhalb des liegenden Magnetringgebildes (2) schwebend angeordnet ist.

2. Schwungrad-Energiespeicher nach Anspruch 1, dadurch gekennzeichnet, daß die radiale Abmessung des Distanzstückes (8) gleich der oder größer als die radiale Abmessung des drehbaren Magnetringgebildes (6) ist.

3. Schwungrad-Energiespeicher nach Anspruch 1 oder 2, dadurch gekennzeichnet, daß die Magnetringgebilde (2, 6) mit Weicheisenringen (4, 11) versehen sind, die als Ringreifen ausgebildet sind, von denen einer am Außenumfang des drehbaren und ein anderer am Innenumfang des liegenden Magnetringgebildes (2, 6) angeordnet ist.

4. Schwungrad-Energiespeicher nach Anspruch 1, 2 oder 3, dadurch gekennzeichnet, daß jedes Magnetringgebilde (2, 6) von einer Ringkette von einzelnen blockartigen Magneten (3, 10) gebildet ist.

5. Schwungrad-Energiespeicher nach einem der vorhergehenden Ansprüche, dadurch gekennzeichnet, daß die axiale Abmessung des liegenden Permanentmagnetringgebildes (2) größer ist als die des drehbaren Permanentmagnetringgebildes (6).

6. Schwungrad-Energiespeicher nach einem der vorhergehenden Ansprüche, dadurch gekennzeichnet, daß die radiale Abmessung des liegenden Permanentmagnetringgebildes (2) größer ist als die des drehbaren Permanentringgebildes (6).

7. Schwungrad-Energiespeicher nach einem der vorhergehenden Ansprüche, dadurch gekennzeichnet, daß das Kugel- oder Rollenlager (13) einen von nicht magnetischem Material gebildeten Käfig aufweist.

## Claims

1. A flywheel energy accumulator, in particular for a motor vehicle, in which a rotatable flywheel mounted on a vertical shaft (9) on the one hand can be detachably coupled to a driving device and on the other hand cooperates with a driven device, and a flywheel mounting is provided which comprises ball or roller bearings (13) for the radial mounting, and in which an axial magnetic mounting of a magnetic ring structure (6) rotatable with the shaft (9) is provided on a further horizontal magnetic ring structure (2) arranged concentrically thereto, characterized in that the flywheel is formed by the rotatable magnetic ring structure (6) and a spacer member (8) disposed between the latter and the shaft (9), the internal diameter of the magnetic ring structure (2) is distinctly larger than the external diameter of the rotatable magnetic ring structure (6), and both magnetic ring structures are magnetized in opposite directions, the rotatable magnetic ring structure (6) being arranged suspended with a substantial portion of its height above the horizontal magnetic ring structure (2).

2. A flywheel energy accumulator according to Claim 1, characterized in that the radial dimension of the spacer member (8) is equal to or greater than the radial dimension of the rotatable magnetic ring structure (6).

3. A flywheel energy accumulator according to Claim 1 or 2, characterized in that the magnetic ring structures (2, 6) are provided with soft-iron rings (4, 11) which are constructed as annular tyres, one of which is disposed on the outer periphery of the rotatable magnetic ring structure (6) and another of which is disposed on the inner periphery of the horizontal magnetic ring structure (2).

4. A flywheel energy accumulator according to Claim 1, 2 or 3, characterized in that each magnetic ring structure (2, 6) is formed by an annular chain of individual block-like magnets (3, 10).

5. A flywheel energy accumulator according to any one of the preceding Claims, characterized in that the axial dimension of the horizontal permanent magnet ring structure (2) is greater than that of the rotatable permanent magnet ring structure (6).

6. A flywheel energy accumulator according to any one of the preceding Claims, characterized in that the radial dimension of the horizontal permanent magnet ring structure (2) is greater than that of the rotatable permanent ring structure (6).

7. A flywheel energy accumulator according to any one of the preceding Claims, characterized in that the ball or roller bearing (13) comprises a cage formed from non-magnetic material.

## Revendications

1. Accumulateur d'énergie à volant d'inertie, en particulier pour un véhicule motorisé, dans lequel un volant pouvant tourner sur un arbre vertical (9), d'une part peut être accouplé, de façon amovible, avec un dispositif d'entraînement et, d'autre part, collabore avec un dispositif entraîné et dans lequel il est prévu une portée du volant d'inertie qui présente des roulements à billes ou à rouleaux (13) pour la portée radiale et dans le cas de laquelle il est prévu une portée magnétique axiale d'un anneau magnétique (6) qui peut tourner avec l'arbre (9) sur un autre anneau magnétique fixe (2) disposé concentriquement au premier, caractérisé en ce que le volant d'inertie est formé de l'anneau magnétique tournant (6) et d'un écarteur (8) qui se trouve entre cet anneau et l'arbre (9), que le diamètre intérieur de l'anneau magnétique fixe (2) est nettement plus grand que le diamètre extérieur de l'anneau magnétique tournant (6) et que les deux anneaux magnétiques sont magnétisés en sens contraire, étant précisé que l'anneau magnétique tournant (6) est disposé flottant avec une partie importante de sa hauteur au-dessus de l'anneau magnétique fixe (2).

2. Accumulateur d'énergie à volant d'inertie selon la revendication 1, caractérisé en ce que la dimension radiale de l'écarteur (8) est égale, ou supérieure, à la dimension radiale de l'anneau magnétique tournant (6).

3. Accumulateur d'énergie à volant d'inertie selon la revendication 1 ou 2, caractérisé en ce que les anneaux magnétiques (2, 6) comportent des bagues en fer doux (4, 11) qui ont la forme de colliers annulaires dont l'un est disposé contre la périphérie extérieure de l'anneau magnétique tournant et un autre contre la périphérie intérieure de l'anneau magnétique fixe (2, 6).

4. Accumulateur d'énergie à volant d'inertie selon la revendication 1, 2 ou 3, caractérisé en ce que chaque anneau magnétique (2, 6) est formé par une chaîne annulaire de différents aimants en forme de blocs (3, 10).

5. Accumulateur d'énergie à volant d'inertie selon l'une des revendications précédentes, caractérisé en ce que la dimension axiale de l'anneau magnétique à aimant permanent fixe (2) est supérieure à celle de l'anneau magnétique à aimant permanent tournant (6).

6. Accumulateur d'énergie à volant d'inertie selon l'une des revendications précédentes, caractérisé en ce que la dimension radiale de l'anneau magnétique à aimant permanent fixe (2) est supérieure à celle de l'anneau magnétique à aimant permanent tournant (6).

7. Accumulateur d'énergie à volant d'inertie selon l'une des revendications précédentes, caractérisé en ce que le roulement à billes ou à rouleaux (7) présente une cage fabriquée en un matériau non magnétique.

Fig..1